Europäisches Patentamt

European Patent Office

Office européen des brevets

(11) Veröffentlichungsnummer: **0 235 359**
**A2**

## (12) EUROPÄISCHE PATENTANMELDUNG

(21) Anmeldenummer: 86115532.3

(22) Anmeldetag: 08.11.86

(51) Int. Cl.⁴: **G01P 5/10**

(30) Priorität: 03.03.86 DE 3606850

(43) Veröffentlichungstag der Anmeldung:
09.09.87 Patentblatt 87/37

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Porth, Wolfgang**
**Röhrborngasse**
**D-6000 Frankfurt am Main 60(DE)**
Erfinder: **Weibler, Wolfgang, Dr.**
**Vor der Heide 14**
**D-6238 Hofheim a. T.(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Anordnung zur Messung der Strömungsgeschwindigkeit.**

(57) Bei einer Anordnung zur Messung der Strömungsgeschwindigkeit von Medien, insbesondere der Ansaugluft von Brennkraftmaschinen, mit einer elektrisch beheizbaren Widerstandsschicht, welche isoliert auf einem Träger aufgebracht ist und mit dem strömenden Medium in Wärmekontakt steht, besteht der Träger aus Silizium. Zwischen dem Träger und der Widerstandsschicht ist eine elektrisch isolierende Schicht aufgebracht. Die Widerstandsschicht besteht vorzugsweise aus entsprechend dotiertem polykristallinen Silizium.

FIG.1

EP 0 235 359 A2

## Anordnung zur Messung der Strömungsgeschwindigkeit

Die Erfindung betrifft eine Anordnung zur Messung der Strömungsgeschwindigkeit von Medien, insbesondere der Ansaugluft von Brennkraftmaschinen, mit einer elektrisch beheizbaren Widerstandsschicht, welche isoliert auf einem Träger aufgebracht ist und mit dem strömenden Medium in Wärmekontakt steht.

Derartige Anordnungen werden hauptsächlich als Luftmassenmesser in Brennkraftmaschinen von Kraftfahrzeugen benötigt, damit der Verbrennungsvorgang unter Berücksichtigung der Masse der angesaugten Luft im Sinne einer Minimierung von Schadstoffen geregelt werden kann. Bei den bekannten Anordnungen besteht der Träger aus Keramik, was den Nachteil aufweist, daß es schwierig nachträglich zu bearbeiten ist.

Die Erfindung ist dadurch gekennzeichnet, daß der Träger aus Silizium besteht, und hat gegenüber den bekannten Anordnungen verschiedene Vorteile. Unter anderem zeichnet es sich durch gute Wärmeleitfähigkeit aus, so daß ein guter Wärmefluß zum strömenden Medium für beide Seiten der Widerstandsschicht gewährleistet ist. Die hohe Temperaturleitzahl von Silizium führt zu einem schnellen Temperaturausgleich innerhalb des Trägers und damit zu einer geringen Ansprechzeit. Ferner ist Silizium leicht zu passivieren, d. h. mit einer nichtleitenden Schicht zu versehen und kann mit Hilfe von in der Halbleitertechnologie bewährten Standardverfahren bearbeitet werden.

Im Vergleich zu ebenfalls als Trägermaterial bekannten Folien weist Silizium den Vorteil auf, daß es formstabil ist.

Gemäß einer Weiterbildung der Erfindung ist zwischen dem Träger und der Widerstandsschicht eine elektrisch isolierende Schicht aufgebracht. Dieses kann durch Nitrieren oder Oxidieren der Oberfläche des Trägers erfolgen. Es ist jedoch im Rahmen einer anderen Weiterbildung der Erfindung möglich, die elektrisch isolierende Schicht durch Aufdampfen von Glas herzustellen.

Eine andere Weiterbildung der Erfindung besteht darin, daß die Widerstandsschicht aus entsprechend dotiertem polykristallinen Silizium besteht.

Gemäß einer anderen Weiterbildung der Erfindung ist vorgesehen, daß auf der Widerstandsschicht und auf der von der Widerstandsschicht abgewandten Oberfläche des Trägers weitere Schichten, deren Wärmeleitfähigkeit gering ist, aufgebracht sind und daß die weiteren Schichten eine in Strömungsrichtung abnehmende Stärke aufweisen. Dadurch wird eine konstante örtliche Wärmeübergangszahl erreicht, so daß sich beim Betrieb der erfindungsgemäßen Anordnung kein Temperaturgradient innerhalb der Widerstandsschicht in Strömungsrichtung ergibt. Dieses trägt wesentlich zu einer geringeren Trägheit der Messung bei.

Gemäß anderen Weiterbildungen können auf dem Träger weitere Widerstände und/oder ein monolitischer Schaltkreis aufgebracht sein. Dadurch wird eine kompakte Anordnung geschaffen, von welcher das Meßergebnis als entsprechendes elektrisches Signal abgenommen werden kann.

Die Erfindung läßt zahlreiche Ausführungsformen zu. Zwei davon sind schematisch in der Zeichnung an Hand mehrerer Figuren dargestellt und nachfolgend beschrieben. Es zeigt:

Fig. 1 eine vergrößerte Schnittdarstellung durch eine erfindungsgemäße Anordnung,

Fig. 2 die Ansicht eines Luftmassensensors mit einer erfindungsgemäßen Anordnung,

Fig. 3 Beispiele für die Montage einer erfindungsgemäßen Anordnung auf einer Leiterplatte und

Fig. 4 ein Schaltbild für einen Luftmassensensor mit einer erfindungsgemäßen Anordnung.

Gleiche Teile sind in den Figuren mit gleichen Bezugszeichen versehen.

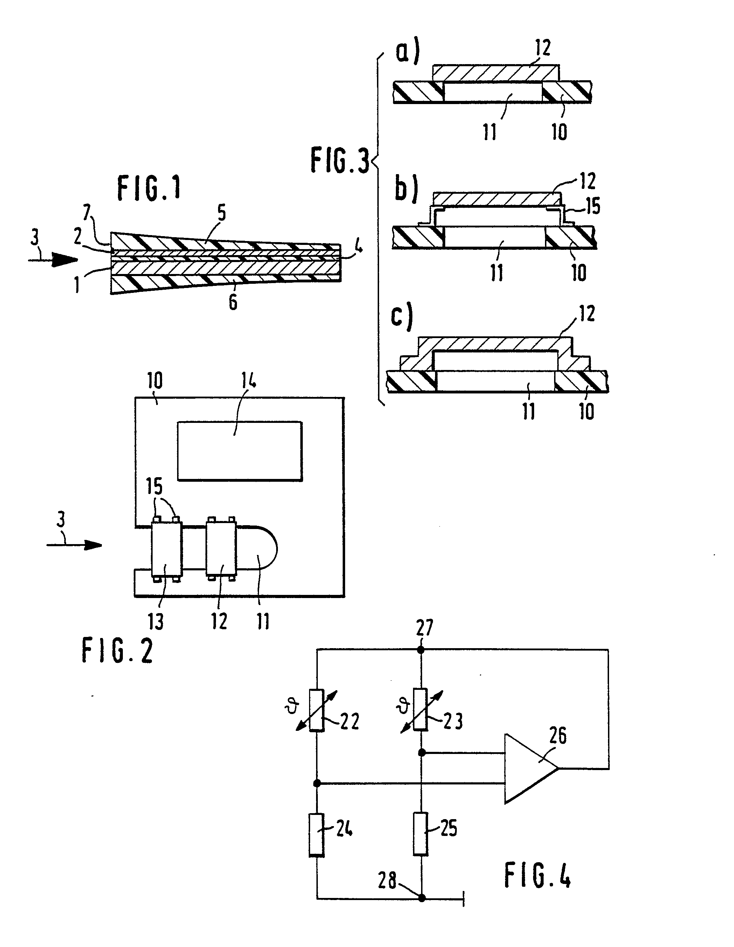

Bei dem in Fig. 1 dargestellten Schnittbild ist mit 1 der Träger aus Silizium bezeichnet. Zur Erzielung einer möglichst hohen Empfindlichkeit soll der Widerstandsschicht 2 durch den schematisch als Pfeil angedeuteten Luftstrom 3 von beiden Seiten Wärme entzogen werden. Der Träger 1 ist daher so dünn, wie es mit Rücksicht auf die mechanische Stabilität möglich ist. Durch die gute Wärmeleitfähigkeit von Silizium wird eine Wärmeabgabe von der Widerstandsschicht 2 über den Träger 1 auf den Luftstrom ebenfalls begünstigt.

Für den Träger 1 kann an sich Silizium verwendet werden, welches nicht über den für elektronische Bauelemente benötigten hohen Reinheitsgrad verfügt. Es ist jedoch durchaus im Rahmen der Erfindung möglich, außer der Widerstandsschicht 2 auf dem Träger 1 weitere Widerstände und gegebenenfalls in monolitischer Technik die zugehörigen elektrischen Schaltungen aufzubauen. Zu letzterem ist jedoch entsprechend reines Silizium erforderlich.

Zur Isolierung des Trägers gegenüber der Widerstandsschicht 2 dient eine Passivierung 4, welche beispielsweise durch Nitrieren, Oxidieren oder Beschichten mit Glas hergestellt werden kann.

Zur Herstellung der Widerstandsschicht 2 wird auf die Passivierung 4 eine Schicht aus hochreinem Polysilizium aufgebracht, welche mit Hilfe von in der Halbleitertechnik bekannten Prozessen die erforderlichen elektrischen Eigenschaften erhält, von denen im folgenden lediglich einige Schritte erwähnt sind. Nach einer Rekristallisation mit Hilfe des Lichtes eines Lasers oder einer Argon-Hochdruck-Lampe er folgt eine Ionenimplantation, womit der Temperaturkoeffizient der Widerstandsschicht in weiten Grenzen festgelegt werden kann. Dabei sind höhere Temperaturkoeffizienten als bei metallischen Widerstandsschichten möglich, wodurch eine höhere Empfindlichkeit und gegebenenfalls eine einfachere elektrische Schaltung möglich ist. Zur Anpassung an den jeweiligen Anwendungsfall kann der Temperaturkoeffizient jedoch auch geringer als technisch möglich gewählt werden.

Danach folgen eine Temperaturbehandlung zum Ausheilen des Kristalls sowie mehrere Schritte zum Herstellen der erforderlichen Struktur und - schließlich die Kontaktierung. Die Struktur kann beispielsweise darin bestehen, daß die Widerstandsschicht 2 eine mäanderförmig verlaufende Leiterbahn bildet.

Nach der Herstellung der Widerstandsschicht 2 wird auf die Widerstandsschicht 2 und auf die entgegengesetzte Oberfläche des Trägers 1 eine Schutzschicht aufgebracht, welche die Anordnung gegenüber, insbesondere chemischen Einflüssen des zu messenden Mediums, schützt.

Gemäß einer Weiterbildung der Erfindung sind die Schutzschichten 5, 6 derart aufgebracht, daß die örtliche Wärmeübergangszahl zwischen dem strömenden Medium und der Widerstandsschicht 2 - in Strömungsrichtung gesehen -mindestens annähernd konstant ist. Ohne diese Maßnahme ist nämlich die örtliche Wärmeübergangszahl in der Nähe der Kante 7, welche der Luftströmung entgegensteht, am größten und nimmt mit zunehmender Entfernung von dieser Kante ab. Dadurch entsteht in Strömungsrichtung ein Temperatur gradient innerhalb der Widerstandsschicht, der von der Strömungsgeschwindigkeit abhängig ist und eine relativ große Ansprechzeit der bekannten Sensoren bedingt. Durch die in Strömungsrichtung geringer werdende Schichtstärke der Schichten 5 und 6 wird dieser Effekt ausgeglichen, so daß die Ansprechzeit verringert wird.

Fig. 2 zeigt eine Anordnung zur Messung der Strömungsgeschwindigkeit, wie sie beispielsweise in den Ansaugkanal einer Brennkraftmaschine zur Luftmassenmessung eingebaut werden kann. Dabei ist eine Leiterplatte 10 mit einem Ausschnitt 11 versehen, welcher entgegen der Strömungsrichtung 3 der Luft offen ist und eine beidseitige Umströmung des eigentlichen Sensors 12, der gemäß Fig. 1 aufgebaut sein kann, und eines Temperatursensors 13 ermöglicht. Die Anordnung des Sensors 12 und des Temperatursensors 13, beispielsweise mit Hilfe von Abstandshaltern 15, ist im Zusammenhang mit Fig. 3 näher erläutert. Ferner ist eine elektrische Schaltung 14 auf der Leiterplatte vorgesehen.

Die Leiterplatte 10 kann in an sich bekannter Weise aus Kunststoff, beispielsweise faserverstärktem Epoxidharz, bestehen und entsprechende Leiterbahnen tragen, auf welche wiederum die Elemente 12, 13 und 14 in herkömmlicher Weise aufgelötet sind. Dabei kann die elektrische Schaltung sowohl diskrete Bauelemente als auch integrierte Schaltkreise umfassen oder in einem integrierten Schaltkreis zusammengefaßt sein.

Die Leiterplatte 10 kann jedoch auch als Träger einer Hybridschaltung ausgebildet sein und aus Keramik oder Glas bestehen. Auch eine passivierte Metallplatte eignet sich zur Aufnahme der Sensoren 12 und 13 sowie der elektrischen Schaltung 14.

Fig. 3 zeigt verschiedene Möglichkeiten, wie der Sensor 12 und der Temperatursensor 13 auf der Leiterplatte 10 angeordnet sein können. Bei der Darstellung nach Fig. 3a) ist der Sensor 12 bzw. der Temperatursensor 13 direkt auf die Leiterplatte 10 gelötet oder geschweißt, wozu verschiedene Verfahren (z. B. Punktschweißen, Laserschweißen, Ultraschallschweißen) zur Verfügung stehen. Gemäß Fig. 3b) sind Abstandshalter 15 vorgesehen, welche gleichzeitig die leitenden Verbindungen zu den nichtdargestellten Leiterbahnen auf der Leiterplatte 10 darstellen können. Schließlich ist in Fig. 3c) angedeutet, daß der Sensor 12 bzw. der Träger 1 (Fig. 1) des Sensors derart geformt ist, daß sich an seinen Seiten Ränder ergeben, welche einen Abstand zwischen dem Träger und der Leiterplatte 10 bedingen. Bei den Figuren 3a) bis 3c) sind Kontaktierungen, welche jeweils erforderlich sind, nicht dargestellt. Verfahren hierzu sind jedoch hinreichend bekannt.

Fig. 4 stellt eine Schaltungsanordnung dar, welche im Rahmen der Erfindung benutzt werden kann. Dabei bilden der Widerstand 22 des Sensors 12, der Widerstand 23 des Temperatursensors 13 - (Fig. 2) sowie zwei weitere Widerstände 24 und 25 eine Brückenschaltung. Die Verbindungspunkte der Widerstände 22 und 24 einerseits sowie der Widerstände 23 und 25 andererseits sind mit den Eingängen eines Differenzverstärkers 26 verbunden, dessen Ausgang zur Speisung der Brücke mit dem Schaltungspunkt 27 verbunden ist, während das andere Ende 28 der Brückenschaltung an Massepotential angeschlossen ist. Die Widerstände 22 und 23 sind temperaturabhängig. Der durch die Widerstände 22 und 24 gebildete Brückenzweig weist einen derart niedrigen Widerstand auf, daß eine Erwärmung des Widerstandes 22 durch den Stromfluß eintritt. Der von den Widerständen 23 und 25 gebildete Brückenzweig ist demgegenüber hochohmig, es tritt somit praktisch keine Erwärmung gegenüber der Umgebung auf. Dieser Brückenzweig dient somit zur Erfassung der Temperatur der strömenden Luft.

Der von der Brückenschaltung und dem Differenzverstärker 26 gebildete Regelkreis ist nun derart ausgelegt, daß die durch die Erwärmung des Widerstandes 22 verursachte Übertemperatur des Widerstandes 22 gegenüber der strömenden Luft konstant gehalten wird. Je schneller die Luftströmung ist, je mehr Wärme wird abgeführt, wozu wiederum mehr Strom zum Beheizen des Widerstandes 22 erforderlich wird. Der Strom durch den Widerstand 22 ist somit ein Maß für die Strömungsgeschwindigkeit der Luft und bei bekanntem Querschnitt der Strömung ein Maß für die Luftmasse pro Zeiteinheit. Zur Erhöhung der Ansprechempfindlichkeit können die Widerstände 24 und 25 mit entgegengesetztem Temperaturkoeffizienten zu den Widerständen 22 und 23 versehen sein.

## Ansprüche

1. Anordnung zur Messung der Strömungsgeschwindigkeit von Medien, insbesondere der Ansaugluft von Brennkraftmaschinen, mit einer elektrisch beheizbaren Widerstandsschicht, welche isoliert auf einem Träger aufgebracht ist und mit dem strömenden Medium in Wärmekontakt steht, dadurch gekennzeichnet, daß der Träger aus Silizium besteht.

2. Anordnung nach Anspruch 1, dadurch gekennzeichnet, daß zwischen dem Träger und der Widerstandsschicht eine elektrisch isolierende Schicht aufgebracht ist.

3. Anordnung nach Anspruch 2, dadurch gekennzeichnet, daß die Widerstandsschicht aus entsprechend dotiertem polykristallinen Silizium besteht.

4. Anordnung nach einem der vorhergehenden Ansprüche, dadurch gekennzeichnet, daß auf die Widerstandsschicht und auf die von der Widerstandsschicht abgewandten Oberfläche des Trägers weitere Schichten, deren Wärmeleitfähigkeit gering ist, aufgebracht sind und daß die weiteren Schichten eine in Strömungsrichtung abnehmende Stärke aufweisen.

5. Anordnung nach einem der vorhergehenden Ansprüche, dadurch gekennzeichnet, daß auf dem Träger weitere Widerstände aufgebracht sind.

6. Anordnung nach Anspruch 5, dadurch gekennzeichnet, daß auf dem Träger ferner ein monolitischer Schaltkreis aufgebracht ist.

7. Verfahren zur Herstellung von Anordnungen nach den vorhergehenden Ansprüchen, dadurch gekennzeichnet, daß die elektrisch isolierende Schicht durch Nitrieren oder Oxidieren aufgebracht wird.

8. Verfahren zur Herstellung von Anordnungen nach den Ansprüchen 1 bis 6, dadurch gekennzeichnet, daß die elektrisch isolierende Schicht durch Aufdampfen von Glas hergestellt wird.

FIG.3

a)

b)

c)

FIG.1

FIG.2

FIG.4